# EUROPÄISCHE PATENTSCHRIFT

(11) **EP 2 086 791 B1**
(45) Veröffentlichungstag und Bekanntmachung des Hinweises auf die Patenterteilung: **14.12.2011**
(21) Anmeldenummer: 07725349.0
(22) Anmeldetag: 18.05.2007
(51) Int. Cl.: B60N 2/07

(54) **LÄNGSVERSTELLVORRICHTUNG FÜR EINEN KRAFTFAHRZEUGSITZ**
LONGITUDINAL ADJUSTMENT DEVICE FOR A MOTOR VEHICLE SEAT
DISPOSITIF DE RÉGLAGE LONGITUDINAL POUR UN SIÈGE DE VÉHICULE AUTOMOBILE

(30) Priorität: 31.10.2006 DE 202006016652 U
(43) Veröffentlichungstag der Anmeldung: 12.08.2009
(73) Patentinhaber: Brose Fahrzeugteile GmbH & Co. Kommanditgesellschaft Coburg, 96450 Coburg (DE)
(72) Erfinder: HOFMANN, Jochen, 96257 Marktgraitz (DE); GLEISSBERG, Marco, 09326 Geringswalde (DE)
(74) Vertreter: Dörr, Matthias
(86) Internationale Anmeldenummer: PCT/EP2007/004441
(87) Internationale Veröffentlichungsnummer: WO 2008/052601

(56) Entgegenhaltungen:
- DE-A1- 19 812 045
- US-A- 4 520 982

## Beschreibung

Die Erfindung bezieht sich auf eine Längsverstellvorrichtung für einen Kraftfahrzeugsitz gemäß dem Oberbegriff des Anspruchs 1.

Eine derartige Längsverstellvorrichtung weist zumindest eine ortsfeste Unterschiene sowie eine in Längsrichtung entlang der Unterschiene verstellbar geführte Oberschiene auf. Zwischen Oberschiene und Unterschiene ist zumindest eine Linearführung mit einem Lagerelement zur Längsführung und Abstützung der Oberschiene angeordnet. Üblicherweise sind bei einer derartigen Längsverstellvorrichtung in Kraftfahrzeuglängsrichtung zwei Unterschienen parallel zueinander angeordnet. An den beiden in ihren korrespondierenden Unterschienen verstellbar geführten Oberschienen ist der Kraftfahrzeugsitz befestigt.

In der DE 198 12 045 A1 ist eine derartige Längsführung für einen Kraftfahrzeugsitz beschrieben. Bei dieser Längsführung sind die Oberschiene und die Unterschiene im wesentlichen als U-Profile ausgebildet. Zwischen der Oberschiene und der Unterschiene ist eine Linearführung mit einem Lagerelement angeordnet, das einen Lagerkäfig mit Ausnehmungen und darin aufgenommenen Wälzkörpern umfasst. Bei einem Verstellen der Oberschiene gegen die Unterschiene wird die Linearführung mit ihrem Lagerkäfig mit der Oberschiene mitbewegt. Dabei stützt die Linearführung mit ihren Wälzkörpern die Oberschiene gegen die Unterschiene ab. Dieses Mitbewegen erfolgt oftmals nicht vollständig, so dass die Oberschiene insbesondere an ihren Enden nur unzureichend abgestützt ist.

Der Erfindung liegt die Aufgabe zugrunde, eine Längsverstellvorrichtung anzugeben, bei der die Abstützung der Oberschiene verbessert ist und die somit ein besonders präzises und leichtgängiges Verstellen der Oberschiene und damit des Kraftfahrzeugsitzes ermöglicht.

Diese Aufgabe wird erfindungsgemäß gelöst durch eine Längsverstellvorrichtung nach Anspruch 1. Dazu weist das Lagerelement in seinem Mittelbereich eine von zwei Anschlägen begrenzte Ausnehmung auf. An der Oberschiene ist ein Mitnehmer vorgesehen, der in die Ausnehmung eingreift und bei einem Verschieben der Oberschiene das Lagerelement mitnimmt.

Bei einem Verschieben des mit der Oberschiene fest verbundenen Kraftfahrzeugsitzes in der Längsrichtung bewegt sich die Oberschiene mit ihrem Mitnehmer in der Ausnehmung des Lagerelements bis zu einem der beiden Anschläge. Sobald der Mitnehmer am Anschlag anliegt, wird derjenige Teil der Linearführung, der in Verschieberichtung vor dem Mitnehmer liegt, durch den korrespondierenden Führungskanal geschoben. Der Teil der Linearführung, der in Verschieberichtung hinter dem Mitnehmer liegt, wird hingegen durch den Führungskanal gezogen. Insbesondere durch das teilweise Ziehen erfolgt eine kontrollierte Kraftübertragung auf die Linearführung und somit ein definiertes Mitbewegen der Linearführung mit der Oberschiene. Somit ist die Oberschiene gegenüber der Unterschiene auf ihrer gesamten Länge durch das Lagerelement abgestützt.

Die auf das Lagerelement wirkende Flächenpressung ist somit gegenüber einer Ausführung nach dem Stand der Technik reduziert. Die Oberschiene und die Unterschiene verformen sich weniger, so dass sich die Oberschiene gegen die Unterschiene leichter mit einem geringeren Kraftaufwand verschieben lässt. Aufgrund der reduzierten Flächenpressung verlängert sich zudem die Lebensdauer des Lagerelements. Weiterhin ist durch diese Ausgestaltung eine Reduzierung des Spiels zwischen Ober- und Unterschiene erreicht.

In einer zweckmäßigen Weiterbildung umfasst das Lagerelement einen Lagerkäfig mit Ausnehmungen und darin aufgenommenen Wälzkörpern. Ein Lagerkäfig ist vergleichsweise einfach herstellbar. Wälzkörper werden standardisiert als Rollen oder Kugeln in verschiedenen Größen gefertigt, deren jeweilige Maximalbelastung vorgegeben und bekannt ist. Je nach Anwendungsfall kann daher auf eine unterschiedliche Art und Anzahl von Wälzkörpern zurückgegriffen werden, so dass die von der Oberschiene auf die Wälzkörper wirkende Flächenpresskraft von den Wälzkörpern sicher aufgenommen ist und sich die Oberschiene leichtgängig verschieben lässt. Zudem kann ein mit Wälzkörpern ausgeführtes Lagerelement eine höhere Flächenpresskraft aufnehmen, als beispielsweise ein als Gleitlager ausgeführtes Lagerelement. Eine besonders hohe Flächenpresskraft wird von als Rollen ausgebildeten Wälzkörpern aufgenommen. Auch die Anzahl und Geometrie der die Wälzkörper aufnehmenden Ausnehmungen lässt sich in einfacher Weise an den Anwendungsfall anpassen. Auch hierdurch ist eine Reduzierung des Spiels erreicht.

Bevorzugt sind die Ausnehmungen jeweils angrenzend an den festen Anschlägen angeordnet. Die auf einen Anschlag wirkende Kraft beim Verschieben der Oberschiene wird somit unmittelbar auf die in den Ausnehmungen angeordneten Wälzkörper übertragen, die in Verschieberichtung unmittelbar vor dem Anschlag liegen. Die Oberschiene lässt sich daher mit einem geringen Kraftaufwand leichtgängig verschieben. Auch die Gefahr eines Hängenbleibens des Lagerelements zwischen Oberschiene und Unterschiene reduziert sich.

In einer vorteilhaften Weiterbildung weisen die, Oberschiene und die Unterschiene im Querschnitt gesehen jeweils zwei endseitig gebogene Schenkel auf. Dabei sind die Oberschiene und die Unterschiene so zueinander angeordnet, dass sie zusammen genommen einen im wesentlichen rechtwinkligen Querschnitt ergeben. Jeweils ein Schenkel der Oberschiene und ein Schenkel der Unterschiene umgreifen sich zur Bildung eines Lagerbereichs zur Aufnahme der Linearführung sowie einer weiteren Linearführung.
Damit bildet der erste Schenkel der Unterschiene den Boden und der zweite Schenkel der Unterschiene die erste Seitenwand der rechtwinkligen Struktur. Der erste Schenkel der Oberschiene bildet den Deckel und der zweite Schenkel der Oberschiene die zweite Seitenwand der rechtwinkligen Struktur. Durch das mehrfache Biegen der Oberschiene und der Unterschiene ist die Kombination in mechanischer Hinsicht sehr verwindungssteif, was zu ihrer Lebensdauer beiträgt.

Bevorzugt weist das Lagerelement der Linearführung einen quer zur Längsrichtung L-förmigen Querschnitt mit einem ersten L-Schenkel und einem zweiten L-Schenkel auf. Insbesondere, wenn der erste L-Schenkel am Boden der Unterschiene anliegt, wird er an der Unterschiene flächig abgestützt. Liegt zudem der zweite L-Schenkel an der von der Oberschiene und der Unterschiene gebildeten Seitenwand an, ist die Position des Lagerelements exakt festgelegt. In beiden L-Schenkeln können in einfacher Weise in Längsrichtung Ausnehmungen zur Aufnahme von Wälzkörpern eingebracht werden. Handelt es sich bei den Wälzkörpern um Rollen, wird die Oberschiene gegen die Unterschiene in besonders effizienter Weise abgestützt.

In einer zweckmäßigen Weiterbildung ist der zweite L-Schenkel im mittleren Bereich des Lagerelements nicht oder nicht vollständig ausgebildet. Somit ist die Ausnehmung mit ihren beiden Anschlägen gebildet. Eine derartige Aussparung ist leicht in den zweiten L-Schenkel einbringbar. Die sonstige Geometrie des Lagerkäfigs bleibt unverändert. Wird der Lagerkäfig der Linearführung beispielsweise aus einem Kunststoff in einem Spritzgussverfahren hergestellt, so ist daher nur eine leichte Abwandlung einer bisher verwendeten Spritzform notwendig.

In einer anderen Variante weist der erste L-Schenkel des Lagerkäfigs eine in Längsrichtung verlaufende Nut als Ausnehmung auf. Die beiden Anschläge sind somit durch die beiden Begrenzungen der Nut in Längsrichtung gebildet. Eine Nut ist fertigungstechnisch einfach in den Lagerkäfig einbringbar, beispielsweise durch Fräsen. Wird der Lagerkäfig der Linearführung beispielsweise aus einem Kunststoff in einem Spritzgussverfahren hergestellt, so ist in diesem Fall keine Abwandlung einer bisher verwendeten Spritzform notwendig

Zweckmäßig ist eine Ausbiegung in der Oberschiene als Mitnehmer vorgesehen. Eine derartige Ausbiegung lässt sich bei einem Profilteil in einfacher Weise anbringen. Zusätzliche Anbauten sind nicht notwendig, so dass der Fertigungsaufwand gering bleibt. Dabei ist der Mitnehmer beispielsweise als in die Seitenwand der Oberschiene eingebrachte und ausgebogene Lasche ausgeführt. Eine derartige Lasche ist in die Oberschiene einfach und kostengünstig durch Stanzen einbringbar.

Nachfolgend wird ein Ausführungsbeispiel der Erfindung anhand einer Zeichnung näher erläutert. Darin zeigen:
- Fig. 1: eine Längsverstellvorrichtung mit zwei Linearführungen in einer perspektivischen Ansicht
- Fig. 2: die Längsverstellvorrichtung aus Fig. 1 in einem Querschnitt quer zur Längsrichtung entlang der Schnittlinie II-II in Fig. 1
- Fig. 3a-d: einen ersten Lagerkäfig der ersten Linearführung in zwei perspektivischen Ansichten, in einer Seitenansicht und in einem Querschnitt
- Fig. 4a,b: das Verstellen der Oberschiene gegenüber der Unterschiene in zwei perspektivischen Ansichten
- Fig. 5a,b: das Verstellen der Oberschiene gegenüber der Unterschiene in zwei Seitenansichten
- Fig. 6a-d: einen zweiten Lagerkäfig der ersten Linearführung in zwei perspektivischen Ansichten, in einer Seitenansicht und in einem Querschnitt
- Fig. 7: eine Längsverstellvorrichtung mit dem Lagerkäfig aus Fig. 6 in einem Querschnitt quer zur Längsrichtung entlang der Schnittlinie VII-VII in Fig. 1
- Fig. 8a,b: das Verstellen der Oberschiene gegen die Unterschiene in zwei Seitenansichten

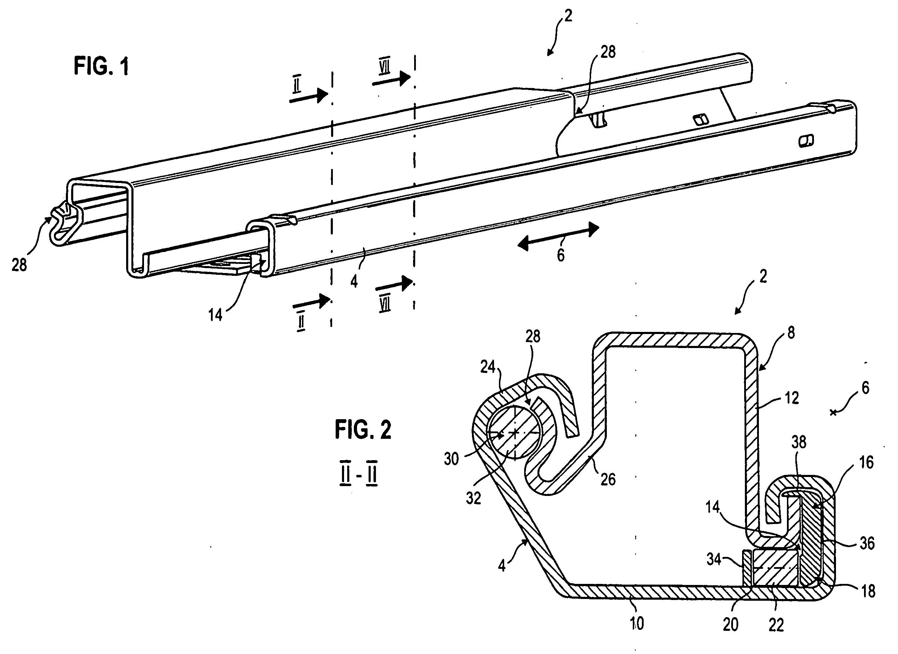

Gemäß Fig. 1 weist eine Längsverstellvorrichtung 2 eine ortsfeste Unterschiene 4 sowie eine in Längsrichtung 6 gegen die Unterschiene verstellbare Oberschiene 8 auf. Die Oberschiene 8 und die Unterschiene 4 sind im wesentlichen als U-Profile ausgebildet. Dabei sind sie so zueinander angeordnet, dass sich ein im wesentlichen rechteckiges Querschnittsprofil ergibt. Die Oberschiene 8 und die Unterschiene 4 weisen im Querschnitt gesehen jeweils zwei endseitig gebogenen Schenkel 10,12,24,26 auf.

Der den Boden des rechteckigen Querschnittsprofils bildende erste Schenkel 10 der Unterschiene 4 und der die erste Seitenwand des rechteckigen Querschnittsprofils bildende erste Schenkel 12 der Oberschiene 8 umfassen sich mit ihren Enden und bilden einen ersten Lagerbereich 14. Dies ist insbesondere aus der Fig. 2 ersichtlich, die einen Querschnitt der Längsverstellvorrichtung 2 quer zu ihrer Längsrichtung 6 zeigt. Im Lagerbereich 14 ist eine erste Linearführung 16 mit einem Lagerelement 18,20,22 angeordnet. Das Lagerelement 18,20,22 setzt sich aus einem Lagerkäfig 18 und in Ausnehmungen 20 angeordneten als Rollen ausgebildeten Wälzkörpern 22 zusammen. Der Querschnitt der Fig. 2 verläuft genau durch einen Wälzkörper 22. Die erste Linearführung 16 nimmt mit ihren Wälzkörpern 22 hauptsächlich die in vertikaler Richtung von der Oberschiene 8 auf die Unterschiene 4 wirkenden Kräfte auf.

Der die zweite Seitenwand des rechteckigen Querschnittsprofils bildende zweite Schenkel 24 der Unterschiene 4 und der dessen Decke bildende zweite Schenkel 26 der Oberschiene 8 umfassen sich mit ihren Enden so, dass sich ein im wesentlichen in Längsrichtung zylinderförmiger Lagerbereich 28 ergibt, in dem eine zweite Linearführung 30 geführt ist. Die zweite Linearführung 30 umfasst Kugeln als Wälzkörper 32, die in Längsrichtung 6 an den beiden Enden des Lagerbereichs angeordnet und durch einen nicht in den Figuren dargestelltes Distanzstück voneinander getrennt sind. Der Querschnitt der Fig. 2 verläuft genau durch einen Wälzkörper 32. Die zweite Linearführung 28 nimmt mit ihren Wälzkörpern 32 hauptsächlich die in horizontaler Richtung von der Oberschiene 8 auf die Unterschiene 4 wirkenden Kräfte auf.

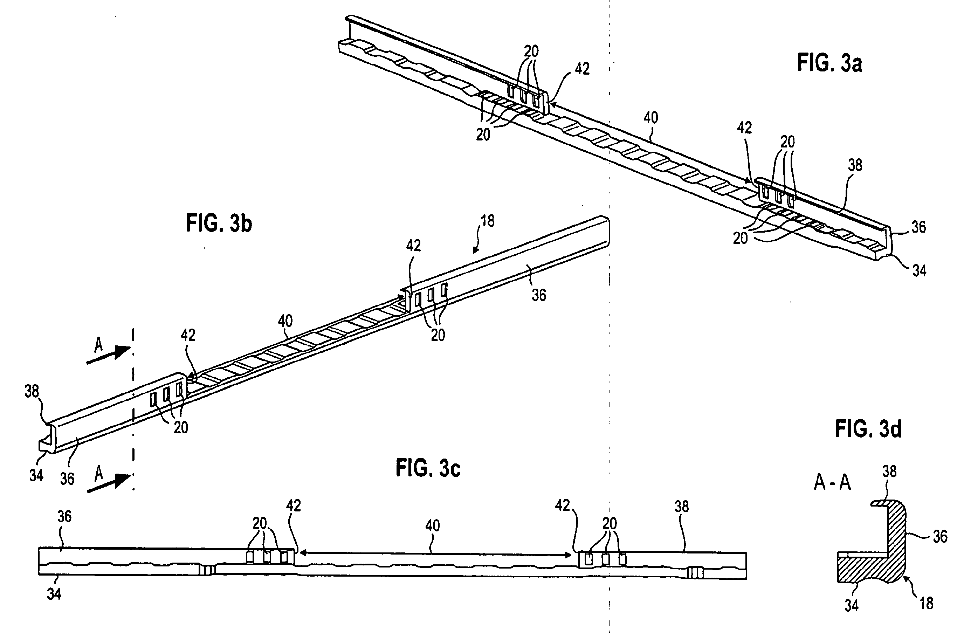

Fig. 3a-d zeigt in zwei perspektivischen Zeichnungen, in einer Seitenansicht und in einem mit A-A bezeichneten Querschnitt den Lagerkäfig 18. Der Lagerkäfig 18 weist zwei L-Schenkel auf und ist im Lagerbereich 14 angeordnet, wie insbesondere Fig. 2 zu entnehmen ist. Er liegt mit seinem ersten L-Schenkel 34 mit dessen äußerer Schmalseite am Boden des rechteckigen Querschnittsprofils und mit dessen innerer Schmalseite an der Oberschiene 8 an. Mit seinem zweiten L-Schenkel 36 liegt er mit dessen äußerer Schmalseite am Ende des ersten Schenkels 10 der Unterschiene 4 und mit dessen innerer Schmalseite am Ende des ersten Schenkel 12 der Oberschiene 8 an. Die Nase 38 am Ende des zweiten L-Schenkels 36 umgreift das Ende des ersten Schenkels 12 der Oberschiene 8 zu einer zusätzlichen Stabilisierung des Lagerkäfigs 18.

In beiden L-Schenkeln 34,36 sind Ausnehmungen 20 für die Aufnahme der in Fig. 3 nicht dargestellten Wälzkörper 22 angeordnet. In Längsrichtung 6 weist der Lagerkäfig 18 eine Ausnehmung 40 auf, die durch ein Weglassen des zweiten L-Schenkels 36 gebildet ist. Die Begrenzung der Ausnehmung 38 bilden zwei Anschläge 42, deren Flächen senkrecht zur Längsrichtung 6 verlaufen.

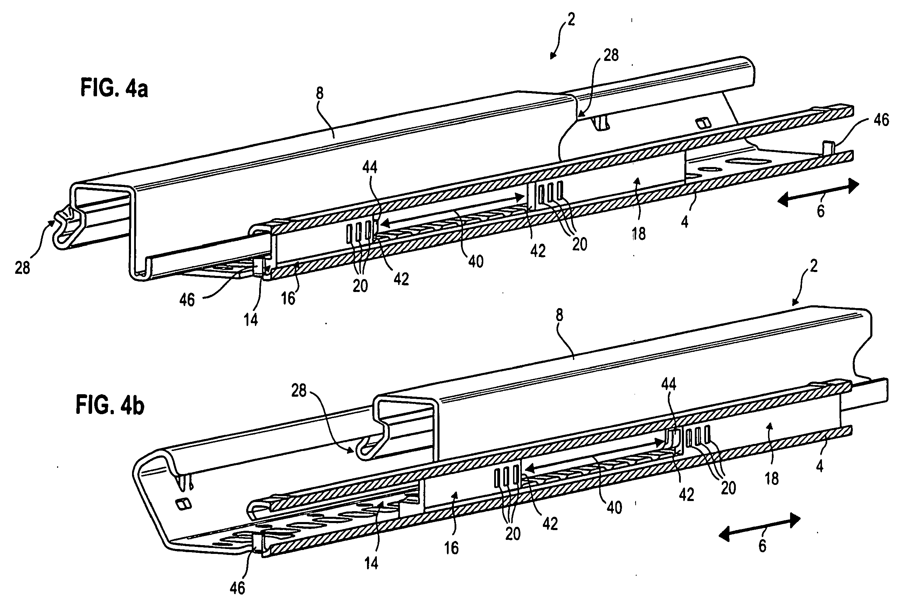

Fig. 4a,b zeigt die Verschiebung der Oberschiene 8 gegen die Unterschiene 4 in zwei perspektivischen Zeichnungen in den beiden möglichen Endstellungen. Zur Verdeutlichung ist die Unterschiene 4 geschnitten dargestellt, so dass der Blick auf die Linearführung 16 freigegeben ist. Die Oberschiene 8 weist eine laschenartige Ausbiegung als Mitnehmer 44 auf, mit der sie in die Ausnehmung 40 des Lagerkäfigs 18 greift. Bei einem Verschieben der Oberschiene 8 gegen die Unterschiene 4 schlägt der Mitnehmer 44 an einem der Anschläge 42 des Lagerkäfigs 18 an.

Der Lagerkäfig 18 wird nun teilweise mit der Oberschiene 8 mitgezogen und teilweise mitgeschoben. Auf diese Weise ist erreicht, dass die Wälzkörper 22 die Oberschiene 8 gegen die Unterschiene 4 auf der gesamten Länge gleichmäßig abstützen. Ein Hängenbleiben des Lagerkäfigs 18, das in einer verschlechterten Abstützung der Oberschiene 8 resultiert, ist somit sicher vermieden. Der Lagerkäfig wird vielmehr bei einem Vorschieben oder Zurückschieben des Kraftfahrzeugsitzes in Längsrichtung immer sicher mitgenommen. Durch die Abstützung der-Oberschiene 8 auf ihrer gesamten Länge ist die Flächenpressung auf die einzelnen Wälzkörper 22 reduziert und ein leichtgängiges Verschieben der Oberschiene 8 und damit des gesamten Kraftfahrzeugsitzes mit einem geringen Kraftaufwand ist erreicht. Das Verschieben erfolgt, bis ein Ende des Lagerkäfigs 8 an einen laschenartig aus der Unterschiene 4 ausgebogenen Endanschlag 46 anstößt.

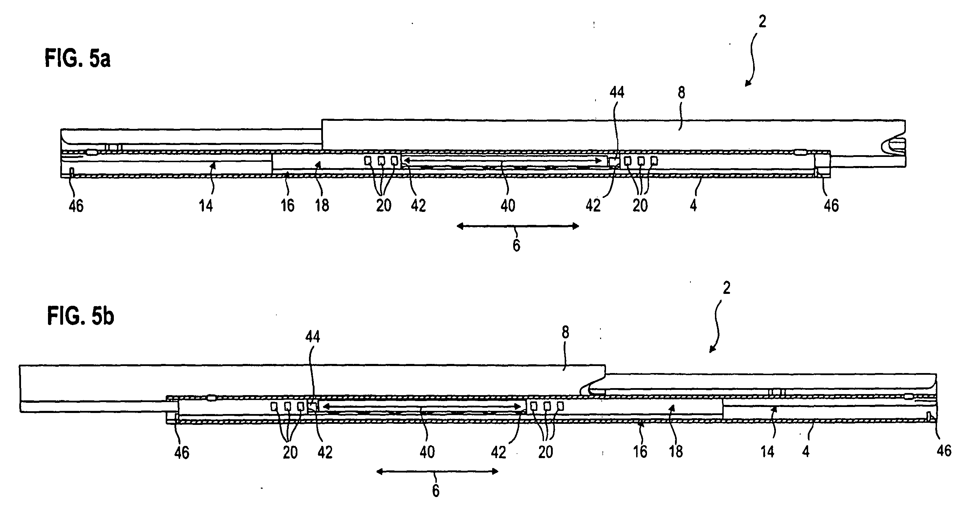

Fig. 5a,b zeigt nochmals die beiden in Längsrichtung 6 möglichen Endstellungen für die Verschiebung der Oberschiene 8 gegen die Unterschiene 4.

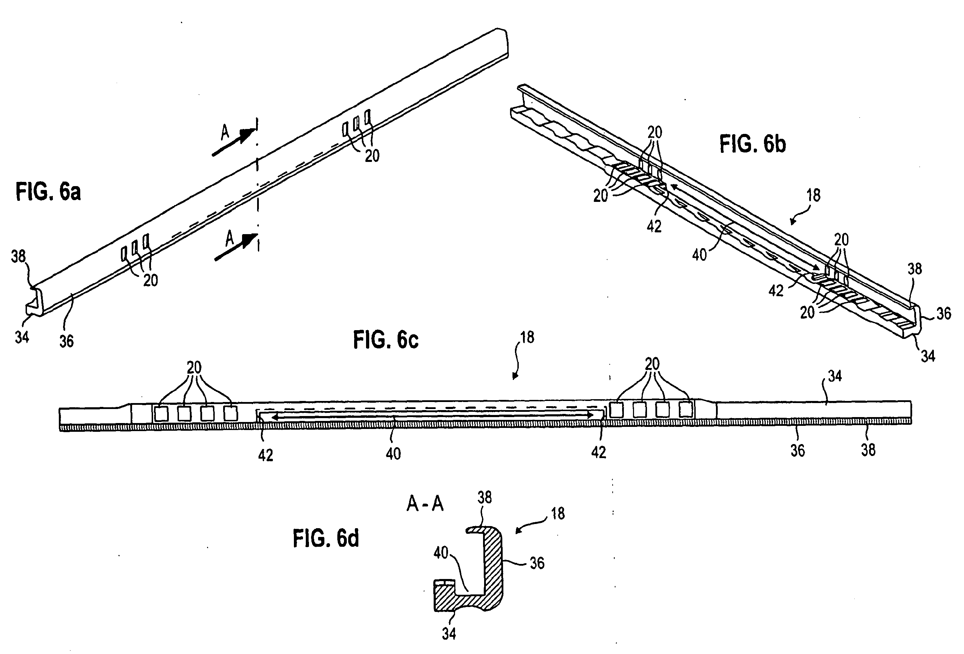

Fig. 6a-d zeigt in zwei perspektivischen Zeichnungen, in einer Seitenansicht in einem mit A-A bezeichneten Querschnitt eine zweite Variante des Lagerkäfigs 18. Der Lagerkäfig 18 weist als Ausnehmung 40 eine in Längsrichtung 6 in seinem Mittelbereich verlaufende Nut auf, die sich beispielsweise durch Fräsen in einfacher Weise in den Lagerkäfig 18 einbringen lässt. Die beiden Begrenzungen der Nut in Längsrichtung 6 verlaufen bilden die beiden Anschläge 42.

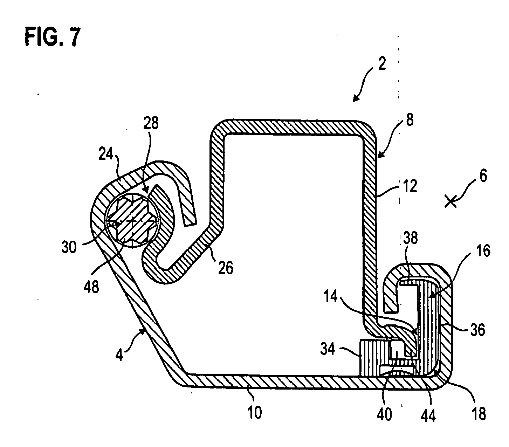

Fig. 7 zeigt eine Schnittzeichnung quer zur Längsrichtung 6 im Bereich des Mitnehmers 44. Der Mitnehmer 44 greift in die als Nut ausgebildete Ausnehmung 40 des Lagerkäfigs 18 ein. Dabei ist der Mitnehmer 44 so ausgebildet, dass er die Wandungen der Ausnehmungen 44 nicht berührt und somit eine Verschiebung der Oberschiene 8 in Längsrichtung 6 nicht behindert. Im zweiten Lagerbereich ist ein Abstandhalter 48 angeordnet, der die an den beiden Enden der Längsverstellvorrichtung 2 im zweiten Lagerbereich 28 angeordneten Wälzkörper 32 auf Abstand hält.

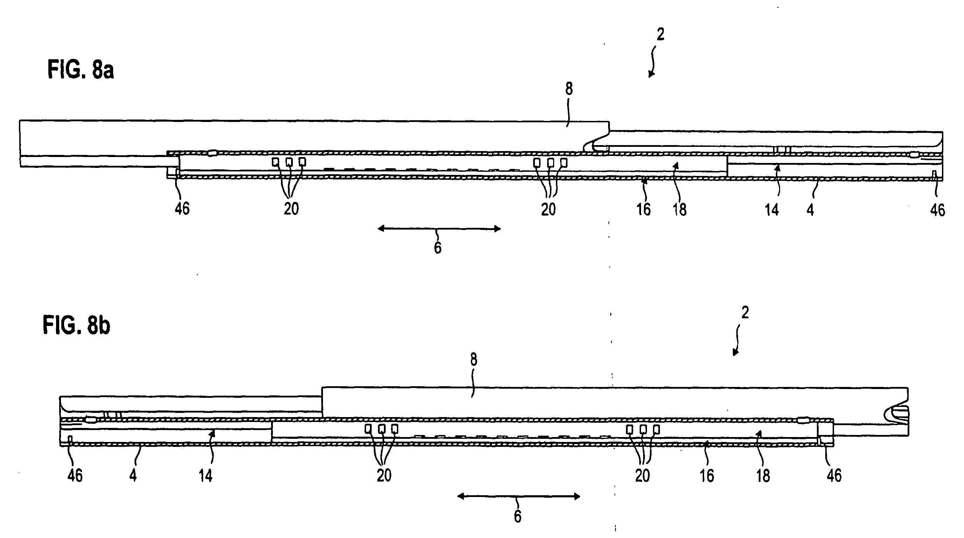

Fig. 8a,b zeigt in einer Seitenansicht die beiden möglichen Endstellungen für eine Verschiebung der Oberschiene 8 gegen die Unterschiene 4. Der Mitnehmer 44 und die Ausnehmung 40 mit ihren beiden Anschlägen 42 sind vom zweiten Schenkel 36 des Lagerkäfigs 18 verdeckt. Bei einer Verschiebung der Oberschiene 8 schlägt der Mitnehmer 44 an einem der beiden Anschläge 42 an. Der Lagerkäfig 18 und somit die gesamte Linearführung 16 wird somit analog zu der in den Fig. 4 und 5 beschriebenen Weise mit der Oberschiene 8 mit bewegt. Auch die zweite Variante des Lagerkäfigs 18 mit einer Nut als Ausnehmung 40 im Mittelbereich gewährleistet eine gegenüber dem Stand der Technik verbesserte Abstützung der Oberschiene 8 gegen die Unterschiene 4.

### Bezugszeichenliste

- 2: Längsverstellvorrichtung
- 4: Unterschiene
- 6: Längsrichtung
- 8: Oberschiene
- 10: erster Schenkel
- 12: erster Schenkel
- 14: erster Lagerbereich
- 16: erste Linearführung
- 18: Lagerkäfig
- 20: Ausnehmung
- 22: Wälzkörper
- 24: zweiter L-Schenkel
- 26: zweiter L-Schenkel
- 28: zweiter Lagerbereich
- 30: zweite Linearführung
- 32: Wälzkörper
- 34: erster Schenkel
- 36: zweiter Schenkel
- 38: Nase
- 40: Ausnehmung
- 42: Anschlag
- 44: Mitnehmer
- 46: Endanschlag
- 48: Abstandhalter

## Patentansprüche

1. Längsverstellvorrichtung (2) für einen Kraftfahrzeugsitz
• mit einer in Längsrichtung (6) verstellbaren am Kraftfahrzeugsitz befestigten Oberschiene (8),
• mit einer ortsfesten Unterschiene (4),
• und mit einer in Längsrichtung (6) zwischen Oberschiene (8) und Unterschiene (4) angeordneten Linearführung (16) mit einem Lagerelement (18,20,22) zur Längsführung und Abstützung der Oberschiene (8),
**dadurch gekennzeichnet, dass**
im Mittelbereich des Lagerelements (18,20,22) eine von zwei Anschlägen (42) begrenzte Ausnehmung (40) sowie ein Mitnehmer (44) an der Oberschiene (8) zum Mitnehmen des Lagerelements (18,20,22) mittels eines Eingreifens in die Ausnehmung (40) vorgesehen sind.

2. Längsverstellvorrichtung (2) nach Anspruch 1,
**dadurch gekennzeichnet,**
**dass** das Lagerelement (18,20,22) einen Lagerkäfig (18) mit Ausnehmungen (20) und darin aufgenommenen Wälzkörpern (22) umfasst.

3. Längsverstellvorrichtung (2) nach Anspruch 2,
**dadurch gekennzeichnet,**
**dass** die Ausnehmungen (20) jeweils angrenzend an den festen Anschlägen, (42) angeordnet sind.

4. Längsverstellvorrichtung (2) nach einem der Ansprüche 1 bis 3,
**dadurch gekennzeichnet,**
• **dass** die Oberschiene (8) und die Unterschiene (4) im Querschnitt gesehen jeweils zwei endseitig gebogene Schenkel (10,12,24,26) aufweisen,
• **dass** die Oberschiene (8) und die Unterschiene (4) so angeordnet sind, dass sie zusammen genommen einen im wesentlichen rechteckigen Querschnitt ergeben und
• **dass** sich jeweils ein Schenkel (12,26) der Oberschiene (8) und ein Schenkel (10,24) der Unterschiene (4) zur Bildung von Lagerbereichen (14,28) umgreifen, in denen die Linearführung (16) sowie eine weitere Linearführung (30) aufgenommen sind.

5. Längsverstellvorrichtung (2) nach einem der Ansprüche 1 bis 4,
**dadurch gekennzeichnet,**
**dass** das Lagerelement (18,20,22) quer zur Längsrichtung (6) einen L-förmigen Querschnitt mit einem ersten L-Schenkel (34) und einem zweiten L-Schenkel (36) aufweist.

6. Längsverstellvorrichtung (2) nach Anspruch 5,
**dadurch gekennzeichnet,**
• **dass** der erste L-Schenkel (34) mit seiner äußeren Schmalseite am Boden der Unterschiene (4) und
• **dass** der zweite L-Schenkel (36) mit seiner äußeren Schmalseite an einer Seitenwand der Unterschiene (4) anliegt.

7. Längsverstellvorrichtung (2) nach einem der Ansprüche 5 oder 6,
**dadurch gekennzeichnet,**
**dass** die L-Schenkel (34,36) mit ihren inneren Schmalseiten an einer Umbiegung der Oberschiene (8) anliegen.

8. Längsverstellvorrichtung (2) nach einem der Ansprüche 5 bis 7,
**dadurch gekennzeichnet,**
**dass** der zweite L-Schenkel (36) in Längsrichtung im mittleren Bereich des Lagerelements (18,20,22) nicht oder nicht vollständig ausgebildet ist und auf diese Weise die Ausnehmung (40) mit ihren beiden Anschlägen (42) gebildet ist.

9. Längsverstellvorrichtung (2) nach einem der Ansprüche 5 bis 7,
**dadurch gekennzeichnet,**
**dass** einer der beiden L-Schenkel (34) eine Nut aufweist und auf diese Weise die Ausnehmung (40) mit ihren beiden Anschlägen (42) gebildet ist.

10. Längsverstellvorrichtung (2) nach einem der Ansprüche 1 bis 9,
**gekennzeichnet durch**
eine Ausbiegung der zur Seitenwand der Unterschiene (4) orientierten Seitenwand der Oberschiene (4) als Mitnehmer (44).

## Claims

1. Longitudinal adjustment device (2) for a motor vehicle seat
• with an upper rail (8) which is adjustable in the longitudinal direction (6) and is fastened to the motor vehicle seat,
• with a positionally fixed lower rail (4),
• and with a linear guide (16) which is arranged in the longitudinal direction (6) between the upper rail (8) and lower rail (4) and has a bearing element (18, 20, 22) for longitudinally guiding and supporting the upper rail (8), **characterized in that** a recess (40) bounded by two stops (42) is provided in the central region of the bearing element (18, 20, 22), and a carrier (44) is provided on the upper rail (8) in order to carry along the bearing element (18, 20, 22) by means of engagement in the recess (40).

2. Longitudinal adjustment device (2) according to Claim 1, **characterized in that** the bearing element (18, 20, 22) comprises a bearing cage (18) with recesses (20) and rolling bodies (22) accommodated therein.

3. Longitudinal adjustment device (2) according to Claim 2, **characterized in that** the recesses (20) are each arranged adjacent to the fixed stops (42).

4. Longitudinal adjustment device (2) according to one of Claims 1 to 3, **characterized**
• **in that** the upper rail (8) and the lower rail (4), as seen in cross section, respectively have two limbs (10, 12, 24, 26) which are bent at the ends,
• **in that** the upper rail (8) and the lower rail (4) are arranged in such a manner that, taken together, they produce a substantially rectangular cross section, and
• **in that** respective limbs (12, 26) of the upper rail (8) and respective limbs (10, 24) of the lower rail (4) engage around one another in order to form bearing regions (14, 28) in which the linear guide (16) and a further linear guide (30) are accommodated.

5. Longitudinal adjustment device (2) according to one of Claims 1 to 4, **characterized in that** the bearing element (18, 20, 22) has, transversely with respect to the longitudinal direction (6), an L-shaped cross section with a first L limb (34) and a second L limb (36).

6. Longitudinal adjustment device (2) according to Claim 5, **characterized**
• **in that** the outer narrow side of the first L limb (34) bears against the base of the lower rail (4), and
• **in that** the outer narrow side of the second L limb (36) bears against a side wall of the lower limb (4).

7. Longitudinal adjustment device (2) according to either of Claims 5 and 6, **characterized in that** the inner narrow sides of the L limbs (34, 36) bear against a bent-over portion of the upper rail (8).

8. Longitudinal adjustment device (2) according to one of Claims 5 to 7, **characterized in that** the second L limb (36) is not formed or is not fully formed in the longitudinal direction in the central region of the bearing element (18, 20, 22) and the recess (40) with the two stops (42) thereof is formed in this manner.

9. Longitudinal adjustment device (2) according to one of Claims 5 to 7, **characterized in that** one of the two L limbs (34) has a groove, and the recess (40) with the two stops (42) thereof is formed in this manner.

10. Longitudinal adjustment device (2) according to one of Claims 1 to 9, **characterized by** an outwardly bent portion of the side wall of the upper rail (4), which side wall is oriented with respect to the side wall of the lower rail (4), as the carrier (44).

## Revendications

1. Dispositif de réglage longitudinal (2) pour un siège de véhicule automobile,
• comprenant un rail supérieur (8) fixé au siège de véhicule et réglable dans la direction longitudinale (6),
• comprenant également un rail inférieur (4) en position fixe,
• et comprenant un guidage linéaire (16) agencé dans la direction longitudinale (6) entre le rail supérieur (8) et le rail inférieur (4), et comportant un élément de palier (18, 20, 22) pour le guidage longitudinal et le soutien du rail supérieur (8),
**caractérisé en ce que** dans la zone centrale de l'élément de palier (18, 20, 22) est prévu un évidement (40) délimité par deux butées (42), et sur le rail supérieur (8) est prévu un entraîneur (44) destiné à entraîner l'élément de palier (18, 20, 22) moyennant la venue en prise dans l'évidement (40).

2. Dispositif de réglage longitudinal (2) selon la revendication 1,
**caractérisé en ce que** l'élément de palier (18, 20, 22) comprend une cage de palier (18) avec des évidements (20) dans lesquels sont logés des corps roulants (22).

3. Dispositif de réglage longitudinal (2) selon la revendication 2,
**caractérisé en ce que** les évidements (20) sont agencés respectivement au voisinage des butées fixes (42).

4. Dispositif de réglage longitudinal (2) selon l'une des revendications 1 à 3,
**caractérisé**
• **en ce que** le rail supérieur (8) et le rail inférieur (4) présentent, vus en section transversale, chacun deux ailes (10, 12, 24, 26) courbées du côté de leur extrémité,
• **en ce que** le rail supérieur (8) et le rail inférieur (4) sont agencés de façon telle que, pris ensemble, ils forment une section transversale sensiblement rectangulaire, et
• **en ce que** chaque aile (12, 26) du rail supérieur (8) et l'aile respective (10, 24) du rail inférieur (4) s'entourent réciproquement en formant des zones de palier (14, 28) dans lesquelles sont logés le guidage linéaire (16) ainsi qu'un autre guidage linéaire (30).

5. Dispositif de réglage longitudinal (2) selon l'une des revendications 1 à 4,
**caractérisé en ce que** l'élément de palier (18, 20, 22) présente, transversalement à la direction longitudinale (6), une section en forme de L comprenant une première aile de L (34) et une deuxième aile de L (36).

6. Dispositif de réglage longitudinal (2) selon la revendication 5,
**caractérisé**
• **en ce que** la première aile de L (34) s'appuie avec son chant extérieur, sur le fond du rail inférieur (4), et
• **en ce que** la deuxième aile de L (36) s'appuie avec son chant extérieur, contre une paroi latérale du rail inférieur (4).

7. Dispositif de réglage longitudinal (2) selon l'une des revendications 5 ou 6,
**caractérisé en ce que** les ailes de L (34, 36) s'appuient avec leurs chants intérieurs, sur une partie repliée du rail supérieur (8).

8. Dispositif de réglage longitudinal (2) selon l'une des revendications 5 à 7,
**caractérisé en ce que** la deuxième aile de L (36) n'est pas formée, ou n'est pas formée complètement, dans la zone centrale de l'élément de palier (18, 20, 22) en se référant à la direction longitudinale, réalisant ainsi l'évidement (40) avec ses deux butées (42).

9. Dispositif de réglage longitudinal (2) selon l'une des revendications 5 à 7,
**caractérisé en ce que** l'une des deux ailes de L (34) présente une rainure, réalisant ainsi l'évidement (40) avec ses deux butées (42).

10. Dispositif de réglage longitudinal (2) selon l'une des revendications 1 à 9,
**caractérisé par** un élément replié hors de la paroi latérale du rail supérieur (8), qui est dirigée vers la paroi latérale du rail inférieur (4), en tant qu'entraîneur (44).
